# EUROPEAN PATENT APPLICATION

(11) **EP 4 723 780 A1**
(43) Date of publication of application: **08.04.2026**
(21) Application number: 23939006.5
(22) Date of filing: 02.06.2023
(51) Int. Cl.: H04W 72/25, H04W 72/40

(54) **SIDELINK COMMUNICATION METHOD AND APPARATUS THEREFOR**

(71) Applicant: Beijing Xiaomi Mobile Software Co., Ltd., Beijing 100085 (CN)
(72) Inventor: JIANG, Xiaowei, Beijing 100085 (CN)
(74) Representative: Stöckeler, Ferdinand
(86) International application number: PCT/CN2023/098167
(87) International publication number: WO 2024/244022

(57) **Abstract**

Embodiments of the present disclosure disclose a sidelink communication method and an apparatus therefor, which may be applied to a communication system. The method comprises: in an autonomous resource allocation mode, removing a first resource from a sidelink (SL) grant when a re-evaluation indication or a preemption indication of the first resource in the SL grant used for sending an SL positioning reference signal (PRS) is acquired. In the present solution, an unreliable resource that needs to be re-evaluated and a resource preempted by another terminal device or a service are removed from the SL grant, so that a resource is re-selected to replace the removed resource, and stable transmission of the SLPRS is maintained, thereby implementing an SLPRS sending resource re-evaluation and preemption method.

## Description

### TECHNICAL FIELD

The disclosure relates to the field of communication technologies, and particularly to a method and an apparatus for sidelink (SL) communication.

### BACKGROUND

Communication between terminals may be performed via a sidelink (SL), for example, by transmitting an SL positioning reference signal (PRS) for SL positioning. However, there is no conclusive method for re-evaluation and pre-emption of resources for SL PRS transmission.

### SUMMARY

Embodiments of the disclosure provide a method and an apparatus for sidelink (SL) communication, such that a first device for transmitting an SL positioning reference signal (PRS) removes a first resource from an SL grant in a case that the first device obtains a re-evaluation indication or a pre-emption indication of the first resource in the SL grant for sending an SL PRS, and to reselect a resource to replace the removed resource, thus realizing the re-evaluation and pre-emption of the resources for the SL PRS transmission.

A first aspect of embodiments of the disclosure provides a method for SL communication. The method is performed by a first device, including: in an autonomous resource allocation mode, removing a first resource from an SL grant in a case that a re-evaluation indication or a pre-emption indication of the first resource in the SL grant for sending an SL PRS is obtained.

In some embodiments, the method further includes determining a second resource from a transmitting resource pool; and adding the second resource to the SL grant.

In some embodiments, the method further includes: before a first period previous to a time unit where SL control information (SCI) indicating the first resource is located, performing re-evaluation or pre-emption check on the first resource, to obtain a re-evaluation result or a pre-emption check result; and obtaining the re-evaluation indication or the pre-emption indication based on the re-evaluation result or the pre-emption check result, in which the first period is an SL processing time.

In some embodiments, the SCI includes first-stage SCI and/or second-stage SCI.

In some embodiments, in the case that the re-evaluation indication or the pre-emption indication of the first resource in the SL grant for sending the SL PRS is obtained, removing the first resource from the SL grant includes: removing the first resource from the SL grant in a case that the re-evaluation indication of the first resource is obtained and the first device did not send SCI for indicating the first resource to a second device.

In some embodiments, in the case that the re-evaluation indication or the pre-emption indication of the first resource in the SL grant for sending the SL PRS is obtained, removing the first resource from the SL grant includes: removing the first resource from the SL grant in a case that the pre-emption indication of the first resource is obtained and the first device sent the SCI for indicating the first resource to a second device.

In some embodiments, determining the second resource from the transmitting resource pool includes: determining at least one resource from the transmitting resource pool, in which a first resource set formed by the at least one resource and a fourth resource meets a first preset condition, and the fourth resource is a resource in the SL grant other than the first resource; and randomly selecting the second resource from the at least one resource.

In some embodiments, the first preset condition includes at least one of: the number of resources in the first resource set meeting a frequency domain resource number condition; the number of retransmissions of the SL PRS corresponding to the first resource set meeting a retransmission number condition; sending the SL PRS using the first resource set being able to be completed within a delay requirement; a time interval between two resources in the first resource set meeting a minimum time interval requirement; or resources in the first resource set being capable of indicating by the SCI for retransmission.

In some embodiments, the second resource is located after the first resource, and the second resource is located within a discontinuous reception (DRX) active period of the second device in a case that the first device is configured with SL DRX, and the second device is a receiving device of the SL PRS.

In some embodiments, obtaining the re-evaluation indication or the pre-emption indication based on the re-evaluation result or the pre-emption check result includes: obtaining the re-evaluation indication in a case that the re-evaluation result indicates that the first resource does not belong to a candidate resource set.

In some embodiments, the method further includes receiving SCI sent by a third device, in which the SCI indicates a fifth resource; and removing the first resource from the candidate resource set in a case that the fifth resource meets a second preset condition.

In some embodiments, the second preset condition includes at least one of: the SCI indicating a resource reservation period of the fifth resource and a reception priority of the fifth resource; the fifth resource overlapping with the first resource; or a measurement result of the fifth resource being greater than or equal to a first threshold.

In some embodiments, obtaining the re-evaluation indication or the pre-emption indication based on the re-evaluation result or the pre-emption check result includes: obtaining the pre-emption indication in a case that the first resource is removed from the candidate resource set, the first device starts a pre-emption function, and the reception priority of the fifth resource is greater than a transmitting priority of the first resource.

In some embodiments, obtaining the re-evaluation indication or the pre-emption indication based on the re-evaluation result or the pre-emption check result includes: obtaining the pre-emption indication in a case that the first resource is removed from the candidate resource set, the first device does not start a pre-emption function, the reception priority of the fifth resource is greater than a transmitting priority of the first resource, and a reception priority of the first resource is greater than a priority of the pre-emption function.

In some embodiments, the pre-emption function of the first device is used independently for the SL PRS, or the pre-emption function of the first device is used for both the SL PRS and SL data.

In some embodiments, the method further includes performing sensing on resources in the transmitting resource pool, to obtain a sensing result; and determining the candidate resource set based on the sensing result.

A second aspect of embodiments of the disclosure provides an apparatus for SL communication. The apparatus includes a processing module. The processing module is configured to, in an autonomous resource allocation mode, remove a first resource from an SL grant in the case that a re-evaluation indication or a pre-emption indication of a first resource in the SL grant for sending an SL PRS is obtained.

A third aspect of embodiments of the disclosure provides a communication device. The communication device includes a transceiver; a memory; and a processor respectively connected to the transceiver and the memory, configured to control wireless signal transmission and reception of the transceiver by executing computer-executable instructions stored in the memory, and enable the method of the first aspect of embodiments of the disclosure to be realized.

A fourth aspect of embodiments of the disclosure provides a computer-readable storage medium. The computer-readable storage medium stores instructions that, when executed, cause the method of the first aspect of embodiments of the disclosure to be realized.

In conclusion, embodiments of the disclosure provide the method and the apparatus for SL communication. The first device for transmitting the SL PRS removes the first resource from the SL grant in the case that the re-evaluation indication or the pre-emption indication of the first resource in the SL grant for sending the SL PRS is obtained, and reselects the resource to replace the removed resource. With the solution of the disclosure, the re-evaluation and the pre-emption of resources for the SL PRS transmission may be realized, thus ensuring stable transmission of the SL PRS.

### BRIEF DESCRIPTION OF THE DRAWINGS

In order to describe the technical solution in embodiments of the disclosure or in the related art more clearly, description is made below briefly to the accompanying drawings described in embodiments of the disclosure or required in the related art.
FIG. 1 is a schematic diagram illustrating an architecture of a communication system according to an embodiment of the disclosure.
FIG. 2 is a flow chart illustrating a method for sidelink (SL) communication according to an embodiment of the disclosure.
FIG. 3 is a flow chart illustrating a method for SL communication according to an embodiment of the disclosure.
FIG. 4 is a flow chart illustrating a method for SL communication according to an embodiment of the disclosure.
FIG. 5 is a flow chart illustrating a method for SL communication according to an embodiment of the disclosure.
FIG. 6 is a flow chart illustrating a method for SL communication according to an embodiment of the disclosure.
FIG. 7 is a flow chart illustrating a method for SL communication according to an embodiment of the disclosure.
FIG. 8 is a flow chart illustrating a method for SL communication according to an embodiment of the disclosure.
FIG. 9 is a flow chart illustrating a method for SL communication according to an embodiment of the disclosure.
FIG. 10 is a flow chart illustrating a method for SL communication according to an embodiment of the disclosure.
FIG. 11 is a flow chart illustrating a method for SL communication according to an embodiment of the disclosure.
FIG. 12 is a flow chart illustrating a method for SL communication according to an embodiment of the disclosure.
FIG. 13 is a block diagram illustrating an apparatus for SL communication according to an embodiment of the disclosure.
FIG. 14 is a block diagram illustrating a communication device according to an embodiment of the disclosure.
FIG. 15 is a block diagram illustrating a chip according to an embodiment of the disclosure.
FIG. 16 is a block diagram illustrating a communication system according to an embodiment of the disclosure.

### DETAILED DESCRIPTION

Reference will now be made in detail to the exemplary embodiments, examples of which are illustrated in the accompanying drawings. When the following description refers to the accompanying drawings, the same numerals in different accompanying drawings refer to the same or similar elements, unless otherwise indicated. The implementations described in the following exemplary embodiments do not represent all implementations consistent with embodiments of the disclosure. Instead, they are merely examples of devices and methods consistent with some aspects of embodiments of the disclosure as recited in the appended claims.

Terms used in embodiments of the disclosure are for the purpose of describing specific embodiments only, and are not intended to limit embodiments of the disclosure. As used in embodiments of the disclosure and the appended claims, the singular forms "a/an" and "the" are also intended to include the plural forms, unless the context clearly dictates otherwise. It should also be understood that the term "and/or" as used herein refers to and includes any and all possible combinations of one or more associated listed items.

It should be understood that although embodiments of the disclosure may use the terms "first, second, third, etc.," to describe various information, the information should not be limited to these terms. These terms are only used to distinguish information of the same type from one another. For example, without departing from the scope of embodiments of the disclosure, first information may also be called second information, and similarly, second information may also be called first information. Depending on the context, the word "if" and "in the case" as used here may be interpreted as "when" or "in response to a determination". For the purposes of brevity and ease of understanding, the terms "greater than" or "less than", "higher than" or "lower than" are used herein to characterize size relationships. For those skilled in the field, it may be understood that the term "greater than" also covers the meaning of "greater than or equal to", the term "less than" also covers the meaning of "less than or equal to", the term "higher than" covers the meaning of "higher than or equal to", and the term "lower than" covers the meaning of "lower than equal to".

To facilitate understanding, introduction is made first to terms involved in the disclosure.

Quality of service (QoS) refers to a probability of a network satisfying a given service contract, or, in multiple cases, is informally used to refer to a probability of a packet passing between two points in the network. The QoS is a control mechanism that provides different priorities for different users or different data flows, or guarantees that the performance of a data flow reaches a certain level based on an application requirement.

A positioning reference signal (PRS) is used for performing positioning measurement, and a positioning device may perform positioning based on a measurement result.

In order to better understand the method for sidelink (SL) communication in embodiments of the disclosure, description is made first to a communication system to which embodiments of the disclosure are applicable.

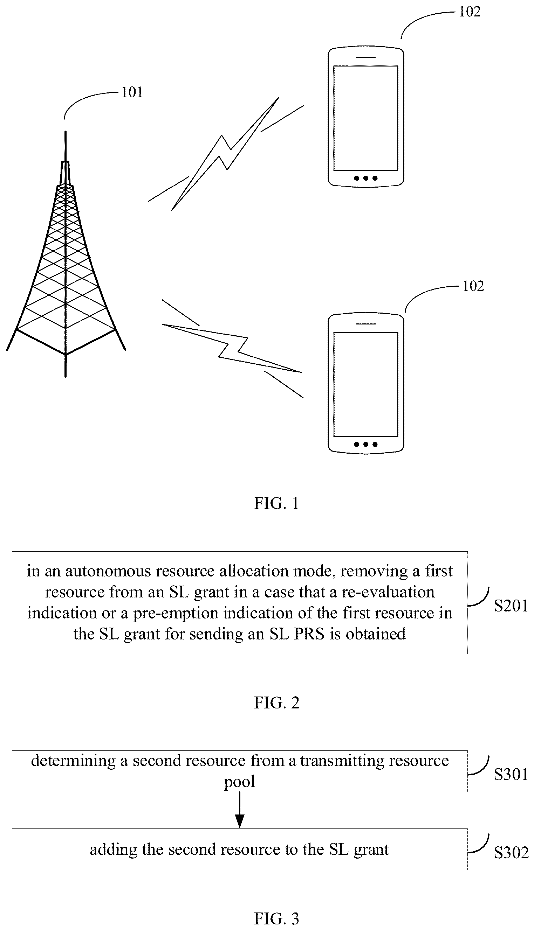

FIG. 1 is a schematic diagram illustrating an architecture of a communication system according to an embodiment of the disclosure. The communication system may include, but is not limited to, one network device and one terminal. The number and forms of the devices illustrated in FIG. 1 are only for example and do not constitute a limitation to embodiments of the disclosure, and two or more network devices and two or more terminals may be included in a practical application. The communication system as illustrated in FIG. 1 includes one network device 101, and one terminal 102 for example.

It needs to be noted that the technical solution in embodiments of the disclosure is applicable to various communication systems, such as a long term evolution (LTE) system, a 5th generation (5G) mobile communication system, a 5G new radio (NR) system or other future new mobile communication systems. It should further be noted that the SL in embodiments of the disclosure may also be referred to as a side link or a direct link.

The network device 101 in embodiments of the disclosure is an entity for sending or receiving a signal at a network side. For example, the network device 101 may be an evolved NodeB (eNB), a transmission reception point (TRP), a next generation NodeB (gNB) in the NR system, a base station in other future mobile communication systems, an access node in a wireless fidelity (WiFi) system, or the like. A detailed technology and a detailed device form employed by the network device 101 are not limited in embodiments of the disclosure. The network device according to embodiments of the disclosure may be combined by a central unit (CU) and a distributed unit (DU). The CU may also be referred to as a control unit. A protocol layer of the network device, such as the base station, may be separated by employing a CU-DU structure. Part of functions of the protocol layer are centrally controlled by the CU, while part or all of remaining functions of the protocol layer are distributed in the DU. The DU is controlled by the CU.

The terminal 102 in embodiments of the disclosure is an entity for receiving or transmitting a signal at a user side, such as, a mobile phone. The terminal may be referred to as a terminal device, a user equipment (UE), a mobile station (MS), a mobile terminal (MT), etc. The terminal may be a vehicle with a communication function, a smart vehicle, a mobile phone, a wearable device, a tablet (Pad), a computer with a wireless transceiving function, a virtual reality (VR) terminal, an augmented reality (AR) terminal, a wireless terminal in industrial control, a wireless terminal in self-driving, a wireless terminal in a remote medical surgery, a wireless terminal in a smart grid, a wireless terminal in transportation safety, a wireless terminal in a smart city, a wireless terminal in a smart home, etc. A detailed technology and a detailed device form employed by the terminal are not limited in embodiments of the disclosure.

In a SL communication, there are four SL transmission modes. An SL transmission mode 1 and an SL transmission mode 2 are used for device-to-device (D2D) communication. An SL transmission mode 3 and an SL transmission mode 4 are used for a V2X communication. When the SL transmission mode 3 is employed, resource allocation is scheduled by the network device 101. In detail, the network device 101 may send resource allocation information to the terminal 102, and then the terminal 102 allocates resources to another terminal, such that the another terminal may send information to the network device 101 by the allocated resources. In the V2X communication, a terminal with a better signal quality or higher reliability may be selected as the terminal 102. The first terminal mentioned in embodiments of the disclosure may refer to the terminal 102, and the second terminal may refer to the another terminal.

It may be understood that the communication system described in embodiments of the disclosure is intended to explain the technical solution of embodiments of the disclosure more clearly, which does not constitute a limitation to the technical solution according to embodiments of the disclosure. Those skilled in the art may know that, with evolution of a system architecture and emergence of a new service scenario, the technical solution according to embodiments of the disclosure are also applicable to a similar technical problem.

The methods provided in the disclosure may be applied to an SL positioning service or other services involving SL PRS transmission. The SL positioning service includes SL absolute positioning, SL relative positioning, and ranging. The absolute positioning refers to determining an absolute coordinate of the UE, the relative positioning refers to determining the coordinate of the UE relative to a reference point, and the ranging refers to determining a distance and/or angle of the UE relative to the reference point. A positioning method includes, but is not limited to, an SL round trip time (RTT), an SL time difference of arrival (TDOA), an SL angle of arrival (AOA), an SL carrier phase, or a combination with UU positioning (positioning of a wireless interface between the UE and the base station).

It should be noted that the method for SL communication according to any embodiment of the disclosure may be performed independently, or in combination with a possible implementation method from other embodiments, or in combination with any technical solution in the related art.

Description is made in detail below to the method and the apparatus for SL communication provided in the disclosure with reference to the accompanying drawings.

Referring to FIG. 2, FIG. 2 is a flow chart illustrating a method for SL communication according to an embodiment of the disclosure. The method is performed by a first device. As illustrated in FIG. 2, the method may include, but is not limited to, the following.

At step S201, in an autonomous resource allocation mode, a first resource is removed from an SL grant in a case that a re-evaluation indication or a pre-emption indication of the first resource in the SL grant for sending an SL PRS is obtained.

In some embodiments of the disclosure, in the autonomous resource allocation mode, the first device removes the first resource from the SL grant in the case that the re-evaluation indication or the pre-emption indication of the first resource in the SL grant for sending the SL PRS is obtained, so as to reselect a new resource.

In some embodiments of the disclosure, the first device is a device that sends the SL PRS. The name of the first device is not limited in the disclosure, which may be, such as, a "sending device" or a "checking device". The type of the first device is not limited in the disclosure, which may be, such as, a device dedicated to the SL PRS sending, or another device that includes an SL PRS sending function.

In some embodiments of the disclosure, the first device may determine its own resource allocation mode, that is, determine whether the first device is in a resource allocation mode based on a network scheduling or the autonomous resource allocation mode.

In some embodiments of the disclosure, the re-evaluation indication indicates one or more resources that have not been sent in an SL PRS resource; and the pre-emption indication indicates one or more resources that have been sent in the SL PRS resource.

In some embodiments of the disclosure, a medium access control (MAC) layer of the first device, which is a sending terminal of the SL PRS, may obtain the re-evaluation indication or the pre-emption indication of the first resource sent by a physical layer of the terminal.

In some embodiments of the disclosure, the first resource is one or more resources removed from the SL grant. The type of the first resource is not limited in the disclosure, which may be, such as, an unreliable resource requiring re-evaluation, or a resource pre-empted by another terminal or communication service. The name of the first resource is not limited in the disclosure, which may be, such as, a "removed resource".

For example, in the autonomous resource allocation mode, the MAC layer of the first device obtains an indication of a pre-empted resource sent by a physical layer, and the first device may remove the indicated pre-empted resource from the SL grant.

In conclusion, according to the method for SL communication provided in the disclosure, the method is performed by the first device and includes: in the autonomous resource allocation mode, removing the first resource from the SL grant in the case that the re-evaluation indication or the pre-emption indication of the first resource in the SL grant for sending the SL PRS is obtained. With the solution, the unreliable resource requiring re-evaluation and resource pre-empted by other terminal or service is removed from the SL grant, so as to reselect a resource to replace the removed resource, thus maintaining stable transmission of the SL PRS.

Referring to FIG. 3, FIG. 3 is a flow chart illustrating a method for SL communication according to an embodiment of the disclosure. The method is performed by a first device. Embodiments illustrated in FIG. 3 provide further supplementation to the steps in embodiments described in FIG. 2. As illustrated in FIG. 3, the method may include, but is not limited to, the following.

At step S301, a second resource is determined from a transmitting resource pool.

In some embodiments of the disclosure, the first device may determine the second resource from the transmitting resource pool and add the second resource to the SL grant.

In some embodiments of the disclosure, a configuration way of the SL PRS resource pool for determining the second resource is not limited. The configuration way may be configured by the network device or pre-configured. The type of the transmitting resource pool is not limited in the disclosure, which may be a resource pool dedicated to the SL PRS or a resource pool shared with SL data.

In some embodiments of the disclosure, the second resource determined from the transmitting resource pool is used to replace the one or more resources in the first resource. The number of resources included in the second resource should be greater than or equal to the number of resources in the first resource removed. A service supported by the second resource should be the same as a service supported by the first resource, or a service supported by the second resource should include a service supported by the first resource, to ensure that the service is operated normally.

For example, in the case that the first device removes the first resource from the SL grant, in which the first resource includes two resources, the first device may determine three resources from the transmitting resource pool as the second resource, in which a type of the three resources in the second resource is the same as a type of the two resources in the first resource.

In some embodiments of the disclosure, the second resource is determined from the transmitting resource pool and is used to replace the first resource. The name of the second resource is not limited in the disclosure, which may be, such as, a "replacement resource".

At step S302, the second resource is added to the SL grant.

In some embodiments of the disclosure, the first device may add the second resource to the SL grant, thus achieving replacement of the first resource and ensuring stable transmission of the SL PRS.

In conclusion, according to the method for SL communication provided in the disclosure, the method is performed by the first device and includes: determining the second resource from the transmitting resource pool; and adding the second resource to the SL grant. With the solution, the second resource is determined from the transmitting resource pool, and the second resource is added to the SL grant, thus realizing replacement of the first resource, to ensure that there are available resources for the SL PRS transmission and to guarantee the stability of the SL PRS transmission.

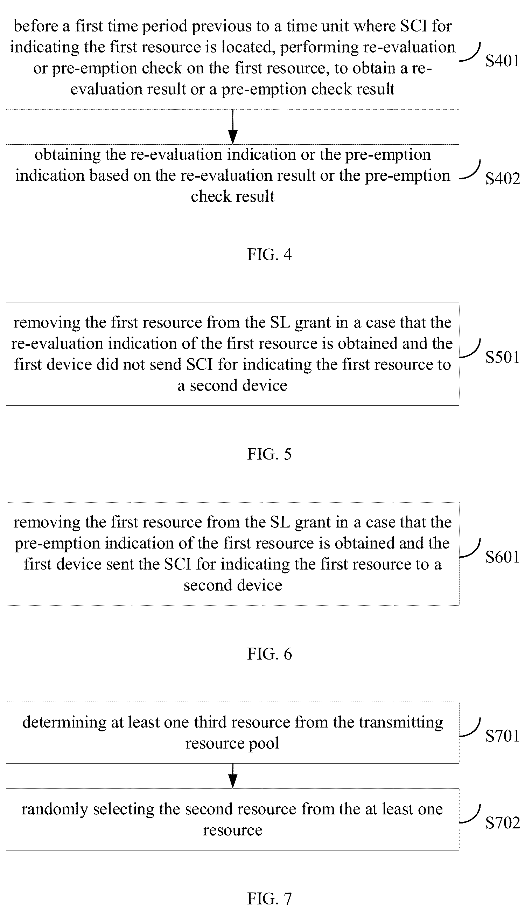

Referring to FIG. 4, FIG. 4 is a flow chart illustrating a method for SL communication according to an embodiment of the disclosure. The method is performed by a first device. Embodiments illustrated in FIG. 4 provide further supplementation to the steps in embodiments described in FIG. 2 and FIG. 3. As illustrated in FIG. 4, the method may include, but is not limited to, the following.

At step S401, before a first period previous to a time unit where SL control information (SCI) for indicating the first resource is located, re-evaluation or pre-emption check is performed on the first resource, to obtain a re-evaluation result or a pre-emption check result.

In some embodiments of the disclosure, before the first period previous to the time unit where the SCI for indicating the first resource is located, the first device performs the re-evaluation or pre-emption check on the first resource to obtain the re-evaluation result or the pre-emption check result, so as to obtain the re-evaluation indication or the pre-emption indication.

In some embodiments of the disclosure, the time unit where the SCI is located may be a slot or another configured time unit, which is not limited in the disclosure.

In some embodiments of the disclosure, the first period may be an SL processing time, in which the SL processing refers to performing the re-evaluation check or pre-emption check on the one or more resources in the SL grant. The name of the first period is not limited in the disclosure, which may be, such as, a "processing period".

In detail, before the first period previous to the time unit where the SCI for indicating the first resource is located, the physical layer of the first device performs the re-evaluation or pre-emption check on the first resource and determines the re-evaluation result or the pre-emption check result. In other words, this step occurs before the step 201, that is, the physical layer of the first device determines, by checking, that the first resource is unreliable or pre-empted.

In some embodiments of the disclosure, the SCI includes first-stage SCI and/or second-stage SCI.

In detail, when the SCI includes the first-stage SCI, it means that the re-evaluation or pre-emption check is performed before the first period previous to the time unit where the first-stage SCI (i.e., a first transmission of the SCI) is located. When the SCI includes the first-stage SCI and the second-stage SCI, it means that performing the re-evaluation or pre-emption check before the first period previous to the time unit where the SCI in either stage is located is not distinguished in detail.

At step S402, the re-evaluation indication or the pre-emption indication is obtained based on the re-evaluation result or the pre-emption check result.

In some embodiments of the disclosure, the first device obtains the re-evaluation indication or the pre-emption indication based on the re-evaluation result or the pre-emption check result, so as to determine the first resource to be removed.

In detail, the physical layer of the first device determines, by checking, that the first resource is unreliable or pre-empted, and sends the re-evaluation indication or the pre-emption indication to the MAC layer, so as to remove the first resource.

In conclusion, according to the method for SL communication provided in the disclosure, the method is performed by the first device, and includes: before the first period previous to the time unit where the SCI for indicating the first resource is located, performing the re-evaluation or pre-emption check on the first resource, to obtain the re-evaluation result or the pre-emption check result; and obtaining the re-evaluation indication or the pre-emption indication based on the re-evaluation result or the pre-emption check result. With the solution, the re-evaluation result or the pre-emption check result is obtained to determine the re-evaluation indication or the pre-emption indication, and the first resource to be removed is determined from the SL grant, thus ensuring that all selected resources are capable of being used for the SL PRS transmission, improving the utilization efficiency of resources in the SL PRS resource pool, and ensuring stable transmission of the SL PRS.

Referring to FIG. 5, FIG. 5 is a flow chart illustrating a method for SL communication according to an embodiment of the disclosure. The method is performed by a first device. Embodiments illustrated in FIG. 5 provide further supplementation to step 201 in FIG. 2. As illustrated in FIG. 5, the method may include, but is not limited to, the following.

At step S501, the first resource is removed from the SL grant in a case that the re-evaluation indication of the first resource is obtained and the first device did not send SCI for indicating the first resource to a second device.

In some embodiments of the disclosure, the first device removes the first resource from the SL grant in the case that the re-evaluation indication of the first resource is obtained and the first device did not send the SCI for indicating the first resource to the second device.

In detail, the MAC layer of the first device removes the first resource from the SL grant in the case that the re-evaluation indication of the first resource in the SL grant for the SL PRS transmission of the physical layer is received by the MAC layer of the first device and the first device did not send the SCI for indicating the first resource to the second device, in which the first resource may include the one or more resources.

In some embodiments of the disclosure, the name of the second device is not limited, which may be, such as, a "receiving device" or a "receiving terminal". The type of the second device is not limited in the disclosure, which may be, such as, a device dedicated to receiving the SL PRS, or another device that includes a function of receiving the SL PRS.

In conclusion, according to the method for SL communication provided in the disclosure, the method is performed by the first device and includes: removing the first resource from the SL grant in the case that the re-evaluation indication of the first resource is obtained and the first device did not send the SCI indicating the first resource to the second device. With the solution, a condition for removing the first resource is stipulated, thus achieving accurate removal of the first resource and improving the utilization efficiency of resources in the transmitting resource pool.

Referring to FIG. 6, FIG. 6 is a flow chart illustrating a method for SL communication according to an embodiment of the disclosure. The method is performed by a first device. Embodiments illustrated in FIG. 6 provide further supplementation to step 201 in FIG. 2. As illustrated in FIG. 6, the method may include, but is not limited to, the following.

At step S601, the first resource is removed from the SL grant in a case that the pre-emption indication of the first resource is obtained and the first device sent SCI for indicating the first resource to a second device.

In some embodiments of the disclosure, the first device removes the first resource from the SL grant in the case that the pre-emption indication of the first resource is obtained and the first device sent the SCI indicating the first resource to the second device.

In detail, the MAC layer of the first device removes the first resource from the SL grant in the case that the re-evaluation indication of the first resource in the SL grant for the SL PRS transmission of the physical layer is received by the MAC layer of the first device and the first device sent the SCI for indicating the first resource to the second device, in which the first resource may include the one or more resources.

In some embodiments of the disclosure, in the case that a first device is configured with the SL DRX, the second resource is located after the first resource, and the second resource is located within a discontinuous reception (DRX) active period of the second device, in which the second device monitors the SCI within the DRX active period, thus ensuring that the second device may receive the SCI. The second device is a receiving device of the SL PRS.

In some embodiments of the disclosure, the name of the second device is not limited, which may be, such as, a "receiving device" or a "receiving terminal". The type of the second device is not limited in the disclosure, which may be, such as, a device dedicated to receiving the SL PRS, or another device that includes the function of receiving the SL PRS.

In conclusion, according to the method for SL communication provided in the disclosure, the method is performed by the first device and includes: removing the first resource from the SL grant in the case that the pre-emption indication of the first resource is obtained and the first device sent the SCI for indicating the first resource to the second device. With the solution, the condition for removing the first resource is stipulated, thus achieving the accurate removal of the first resource and improving the utilization efficiency of resources in the transmitting resource pool.

Referring to FIG. 7, FIG. 7 is a flow chart illustrating a method for SL communication according to an embodiment of the disclosure. The method is performed by a first device. Embodiments illustrated in FIG. 7 provide further supplementation to step 301 in FIG. 3. As illustrated in FIG. 7, the method may include, but is not limited to, the following.

At step S701, at least one resource is determined from the transmitting resource pool.

In some embodiments of the disclosure, the first device may determine the at least one resource from the transmitting resource pool, to randomly select the second resource from the at least one resource.

In some embodiments of the disclosure, a first resource set is formed by at least one third resource and a fourth resource, in which the first resource set meets a first preset condition, and the fourth resource is a resource in the SL grant other than the first resource.

In some embodiments of the disclosure, the first preset condition includes at least one of: the number of resources in the first resource set meeting a frequency domain resource number condition; the number of retransmissions of the SL PRS corresponding to the first resource set meeting a retransmission number condition; sending the SL PRS using the first resource set being able to be completed within a delay requirement; a time interval between two resources in the first resource set meeting a minimum time interval requirement; or resources in the first resource set being capable of indicating by the SCI for retransmission.

In some embodiments of the disclosure, the first preset condition may be determined based on a communication service requirement, in which different communication services may correspond to the same or different first preset conditions; or the first preset condition may be determined by relevant configurations of the resources. The method for determining the first preset condition is not limited in the disclosure.

For example, the first device may determine three resources from the resource pool, and also enable the sending of the SL PRS to be completed within a delay requirement in the case that the resources meet the frequency domain resource number condition.

At step S702, the second resource is randomly selected from the at least one resource.

In some embodiments of the disclosure, the first device may randomly select the second resource from the at least one resource, to add the second resource to the SL grant.

In some embodiments of the disclosure, the second resource is located after the first resource, and the second resource is located within the DRX active period of the second device in the case that the first device is configured with the SL DRX. The second device monitors the SCI within the DRX active period, thus ensuring that the second device may receive the SCI, in which the second device is a receiving device of the SL PRS.

In conclusion, according to the method for SL communication provided in the disclosure, the method is performed by the first device and includes: determining the at least one resource from the transmitting resource pool, in which the first resource set formed by the at least one resource and the fourth resource meets the first preset condition, and the fourth resource is the resource other than the first resource in the SL grant; and randomly selecting the second resource from the at least one resource. With the solution, the one or more resources meeting the first preset condition is determined from the resource pool and the second resource is randomly selected from the resources, thus ensuring that the selected second resource may replace the first resource, guaranteeing that the SL PRS transmission is operated normally, and improving the stability of the SL PRS transmission.

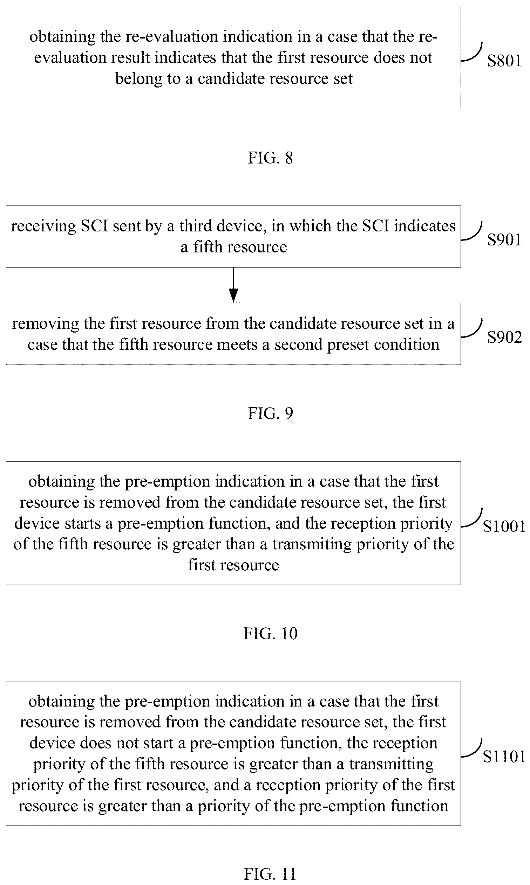

Referring to FIG. 8, FIG. 8 is a flow chart illustrating a method for SL communication according to an embodiment of the disclosure. The method is performed by a first device. Embodiments illustrated in FIG. 8 provide further supplementation to step 402 in FIG. 4. As illustrated in FIG. 8, the method may include, but is not limited to, the following.

At step S801, the re-evaluation indication is obtained in a case that the re-evaluation result indicates that the first resource does not belong to a candidate resource set.

In some embodiments of the disclosure, the first device obtains the re-evaluation indication in the case that the re-evaluation result indicates that the first resource does not belong to the candidate resource set.

In detail, a factor such as change of a channel used by a service or presence of strong interference in the channel may cause that some resources do not belong to the candidate resource set. In this case, the re-evaluation result indicates that the first resource does not belong to the candidate resource set, and then the physical layer of the first device sends the re-evaluation indication for the resource to the MAC layer, to remove the first resource from the SL grant.

In conclusion, according to the method for SL communication provided in the disclosure, the method is performed by the first device and includes: obtaining the re-evaluation indication in the case that the re-evaluation result indicates that the first resource does not belong to the candidate resource set. With the solution, the re-evaluation indication is sent for a resource meeting a certain condition, thus achieving accurate selection of the resource to be removed and improving the utilization efficiency of a sending resource.

Referring to FIG. 9, FIG. 9 is a flow chart illustrating a method for SL communication according to an embodiment of the disclosure. The method is performed by a first device. Embodiments illustrated in FIG. 9 provide further supplementation to embodiments described in FIG. 2 to FIG. 8. As illustrated in FIG. 9, the method may include, but is not limited to, the following.

At step S901, SCI sent by a third device is received, in which the SCI indicates a fifth resource.

In some embodiments of the disclosure, the first device receives the SCI sent by the third device, in which the SCI indicates the fifth resource, to determine whether to remove the first resource from the candidate resource set.

In some embodiments of the disclosure, the third device refers to any device other than the first device. The third device may be a second device or another device, which is not limited in the disclosure. The name of the third device is not limited in the disclosure, which may be, such as, a "non-sending device".

In detail, in some embodiments of the disclosure, multiple terminals may use a resource in a common resource pool. Any terminal needs to inform other terminals when using a certain resource. That is, the first device may receive the SCI sent by other terminals, thus enabling the first device to determine a usage status of the resource in the common resource pool, i.e., determine which resource used by which terminal.

In some embodiments of the disclosure, the fifth resource may be the resource in the common resource pool used by the third device, that is, a resource in the common resource pool used by a regional device other than the device for sending the SL PRS.

At step S902, the first resource is removed from the candidate resource set in a case that the fifth resource meets a second preset condition.

In some embodiments of the disclosure, the first device removes the first resource from the candidate resource set in the case that the fifth resource meets the second preset condition, thus completing the update of the candidate resource set.

In some embodiments of the disclosure, the second preset condition includes at least one of: the SCI indicating a resource reservation period of the fifth resource and a reception priority of the fifth resource; the fifth resource overlapping with the first resource; or a measurement result of the fifth resource being greater than or equal to a first threshold.

In some embodiments of the disclosure, the resource in the common resource pool may be selected by multiple terminals, in which a terminal with a highest priority obtains the resource, and the remaining terminals actively abandon the resource and select other resources in the common resource pool for replacement. A priority level of the terminal may be pre-configured or configured by the network device. The e configuration way of the priority level of the terminal is not limited in the disclosure.

In some embodiments of the disclosure, the first device needs to receive the SCI sent by other devices, measure an SRP in the SCI respectively, and determine whether each SRP is greater than or equal to the first threshold.

In conclusion, according to the method for SL communication provided in the disclosure, the method is performed by the first device and includes: receiving the SCI sent by the third device, in which the SCI indicates the fifth resource; and removing the first resource from the candidate resource set in the case that the fifth resource meets the second preset condition. With the solution, a condition is preset for the fifth resource to determine whether to remove the first resource from the candidate resource set, thus achieving update of the candidate resource set and ensuring that the resource in the candidate resource set meets the requirement for the SL PRS transmission.

Referring to FIG. 10, FIG. 10 is a flow chart illustrating a method for SL communication according to an embodiment of the disclosure. The method is performed by a first device. Embodiments illustrated in FIG. 10 provide further supplementation to step 402 in FIG. 4. As illustrated in FIG. 10, the method may include, but is not limited to, the following.

At step S1001, the pre-emption indication is obtained in a case that the first resource is removed from the candidate resource set, the first device starts a pre-emption function, and the reception priority of a fifth resource is greater than a transmitting priority of the first resource.

In some embodiments of the disclosure, the first device obtains the pre-emption indication in the case that the first resource is removed from the candidate resource set, the first device starts the pre-emption function, and the reception priority of the fifth resource is greater than the transmitting priority of the first resource, to determine whether the first resource is pre-empted.

In detail, the physical layer of the first device sends the pre-emption indication of the resource to the MAC layer in the case that the first resource is removed from the candidate resource set, the first device starts the pre-emption function, and the reception priority of the fifth resource is greater than the transmitting priority of the first resource, to determine that the resource is pre-empted.

In some embodiments of the disclosure, the pre-emption function of the first device is used independently for the SL PRS, or the pre-emption function of the first device is used for both the SL PRS and SL data.

In conclusion, according to the method for SL communication provided in the disclosure, the method is performed by the first device and includes: obtaining the pre-emption indication in the case that the first resource is removed from the candidate resource set, the first device starts the pre-emption function, and the reception priority of the fifth resource is greater than the transmitting priority of the first resource. With the solution, a condition for obtaining the pre-emption indication is set to determine whether the first resource is pre-empted, thus improving the accuracy of resource judgment, and enhancing the utilization efficiency of the sending resource.

Referring to FIG. 11, FIG. 11 is a flowchart illustrating a method for SL communication according to an embodiment of the disclosure. The method is performed by a first device. Embodiments illustrated in FIG. 11 provide further supplementation to step 402 in FIG. 4. As illustrated in FIG. 11, the method may include, but is not limited to, the following.

At step S1101, the pre-emption indication is obtained in a case that the first resource is removed from the candidate resource set, the first device does not start a pre-emption function, a reception priority of the fifth resource is greater than a transmitting priority of the first resource, and a reception priority of the first resource is greater than a priority of the pre-emption function.

In some embodiments of the disclosure, the first device obtains the pre-emption indication in the case that the first resource is removed from the candidate resource set, the first device does not start the pre-emption function, the reception priority of the fifth resource is greater than the transmitting priority of the first resource, and the reception priority of the first resource is greater than the priority of the pre-emption function.

In detail, the physical layer of the first device sends the pre-emption indication of the resource to the MAC layer in the case that the first resource is removed from the candidate resource set, the first device does not start the pre-emption function, the reception priority of the fifth resource is greater than the transmitting priority of the first resource, and the reception priority of the first resource is greater than the priority of the pre-emption function, to determine that the resource is pre-empted.

In some embodiments of the disclosure, the pre-emption function of the first device is used independently for the SL PRS, or the pre-emption function of the first device is used for both the SL PRS and SL data.

In conclusion, according to the method for SL communication provided in the disclosure, the method is performed by the first device and includes: obtaining the pre-emption indication in the case that the first resource is removed from the candidate resource set, the first device does not start the pre-emption function, the reception priority of the fifth resource is greater than the transmitting priority of the first resource, and the reception priority of the first resource is greater than the priority of the pre-emption function. With the solution, a condition for obtaining the pre-emption indication is set, to determine whether the first resource is pre-empted, improves the accuracy of the resource judgment, and enhances the utilization efficiency of the sending resource.

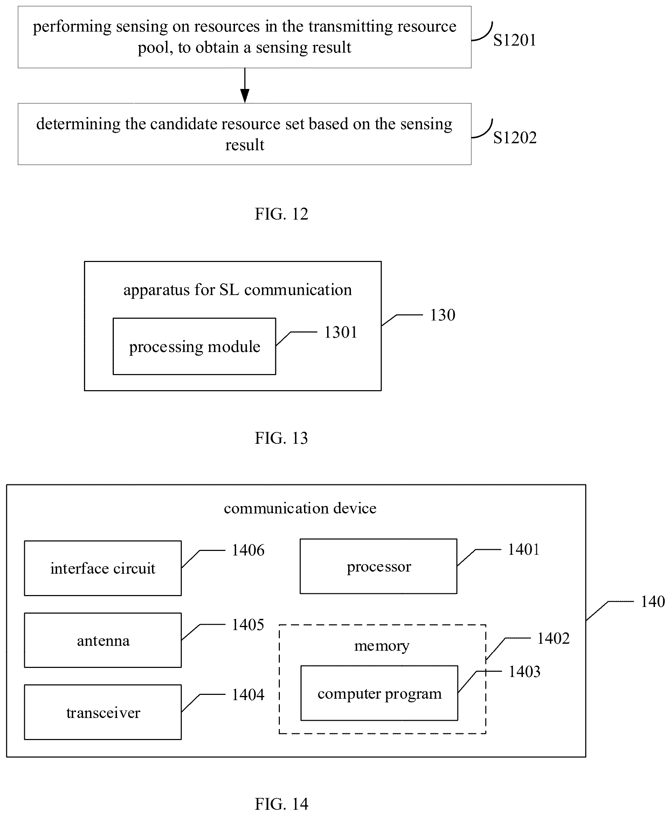

Referring to FIG. 12, FIG. 12 is a flow chart illustrating a method for SL communication according to an embodiment of the disclosure. The method is performed by a first device. Embodiments illustrated in FIG. 12 provide further supplementation to embodiments described in FIG. 8 to FIG. 12. As illustrated in FIG. 12, the method may include, but is not limited to, the following.

At step S1201, sensing is performed on resources in a transmitting resource pool, to obtain a sensing result.

In some embodiments of the disclosure, the first device performs sensing on the resources in the transmitting resource pool to obtain the sensing result, so as to determine which resources in the resource pool meet the requirement for the SL PRS transmission.

In some embodiments of the disclosure, due to the resource in the resource pool may be occupied by other terminal, the first device needs to perform sensing on the resource in the resource pool to determine which resource is capable of being used by the first device.

At step S1202, the candidate resource set is determined based on the sensing result.

In some embodiments of the disclosure, the first device determines the candidate resource set based on the sensing result, for use by the first device.

In some embodiments of the disclosure, the first device may select a resource with the sensing result meeting a certain condition to form the candidate resource set. For example, sensing is performed to determine which resource is not occupied by other terminals, and the unoccupied resource is taken as an available resource to form the candidate resource set. The candidate resource set and the detailed determining way are not limited in the disclosure.

In conclusion, according to the method for SL communication provided in the disclosure, the method is performed by the first device and includes: performing sensing on the resources in the transmitting resource pool, to obtain the sensing result; and determining the candidate resource set based on the sensing result. With the solution, the candidate resource set is determined to determine the resource available by the first device, thus ensuring stable transmission of the SL PRS and laying the foundation for determining whether the first resource belongs to the candidate resource set and whether to send the re-evaluation indication.

Referring to FIG. 13, FIG. 13 is a block diagram illustrating a communication device 130 for SL communication according to an embodiment of the disclosure. The apparatus 130 for SL communication illustrating in FIG. 13 may include a processing module 1301. The processing module 1301 is configured to, in an autonomous resource allocation mode, remove a first resource from an SL grant in a case that a re-evaluation indication or a pre-emption indication of a first resource in the SL grant for sending an SL PRS is obtained.

In conclusion, according to the communication device for SL communication provided in the disclosure, the communication device includes the processing module. The processing module is configured to, in the autonomous resource allocation mode, remove the first resource from the SL grant in the case that the re-evaluation indication or the pre-emption indication of the first resource in the SL grant for sending the SL PRS is obtained. With the solution, an unreliable resource that requires re-evaluation and a resource pre-empted by other terminal or service is removed from the SL grant, so as to reselect a resource to replace the removed resource, thus maintaining the stable transmission of the SL PRS.

The communication device 130 may be a first device, an apparatus in the first device, or an apparatus that may be used in matching with the first device.

In the case that the communication device 130 is configured at the first device side.

The processing module 1301 is configured to determine a second resource from a transmitting resource pool; and add the second resource to the SL grant.

Alternatively, the processing module 1301 is further configured to, before a first period previous to a time unit where SCI for indicating the first resource is located, perform re-evaluation or pre-emption check on the first resource, to obtain a re-evaluation result or a pre-emption check result; and obtain the re-evaluation indication or the pre-emption indication based on the re-evaluation result or the pre-emption check result, in which the first period is an SL processing time, and the SCI includes first-stage SCI and/or second-stage SCI.

Alternatively, the processing module 1301 is also configured to remove the first resource from the SL grant in a case that the re-evaluation indication of the first resource is obtained and the first device did not send SCI for indicating the first resource to a second device.

Alternatively, the processing module 1301 is configured to remove the first resource from the SL grant in a case that the pre-emption indication of the first resource is obtained and the first device sent the SCI for indicating the first resource to a second device.

Alternatively, the processing module 1301 is also configured to determine at least one third resource from the transmitting resource pool, in which a first resource set formed by the at least one third resource and a fourth resource meets a first preset condition, and the fourth resource is a resource in the SL grant other than the first resource; and randomly select the second resource from the at least one third resource.

Alternatively, the first preset condition includes at least one of: the number of resources in the first resource set meeting a frequency domain resource number condition; the number of retransmissions of the SL PRS corresponding to the first resource set meeting a retransmission number condition; sending the SL PRS using the first resource set being able to be completed within a delay requirement; a time interval between two resources in the first resource set meeting a minimum time interval requirement; or resources in the first resource set being capable of indicating by the SCI for retransmission.

Alternatively, the second resource is located after the first resource, and the second resource is located within a DRX active period of the second device in a case that the first device is configured with SL DRX, and the second device is a receiving device of the SL PRS.

Alternatively, the processing module 1301 is also configured to obtain the re-evaluation indication in a case that the re-evaluation result indicates that the first resource does not belong to a candidate resource set.

Alternatively, the processing module 1301 is also configured to receive SCI sent by a third device, in which the SCI indicates a fifth resource; and remove the first resource from the candidate resource set in a case that the fifth resource meets a second preset condition.

Alternatively, the second preset condition includes at least one of: the SCI indicating a resource reservation period of the fifth resource and a reception priority of the fifth resource; the fifth resource overlapping with the first resource; or a measurement result of the fifth resource being greater than or equal to a first threshold.

Alternatively, the processing module 1301 is also configured to obtain the pre-emption indication in a case that the first resource is removed from the candidate resource set, the first device starts a pre-emption function, and the reception priority of the fifth resource is greater than a transmitting priority of the first resource.

Alternatively, the processing module 1301 is also configured to obtain the pre-emption indication in a case that the first resource is removed from the candidate resource set, the first device does not start a pre-emption function, a reception priority of the fifth resource is greater than a transmitting priority of the first resource, and a reception priority of the first resource is greater than a priority of the pre-emption function.

Alternatively, the pre-emption function of the first device is used independently for the SL PRS, or the pre-emption function of the first device is used for both the SL PRS and SL data.

Alternatively, the processing module 1301 is also configured to perform sensing on resources in the transmitting resource pool, to obtain a sensing result; and determine the candidate resource set based on the sensing result.

Referring to FIG. 14, FIG. 14 is a block diagram illustrating a communication device 1400 according to another embodiment of the disclosure. The communication device 140 may be a terminal, a chip, a system on chip or a processor that supports a network device to implement the above method, or a chip, a system on chip or a processor that supports the terminal to realize the above method. The communication device may be configured to realize the methods described in the method embodiments, and for details, reference may be made to descriptions in the method embodiments.

The communication device 140 may include one or more processors 1401. The processor 1401 may include a general purpose processor or a dedicated processor. For example, the processor may be a baseband processor or a central processor. The baseband processor may be configured to process a communication protocol and communication data, and the central processor may be configured to control a communication device (such as, a base station, a baseband chip, a terminal, a terminal chip, a DU or CU, etc.), to execute a computer program, and process data of the computer program.

Alternatively, the communication device 140 may also include one or more memories 1402 with a computer program 1403 stored. The computer program 1403 is executed by the processor 1401, such that the communication device 140 executes the method as described in the above method embodiments. Alternatively, the memory 1402 may also store data. The communication device 140 and the memory 1402 may be independently configured or integrated together.

Alternatively, the communication device 140 may also include a transceiver 1404 and an antenna 1405. The transceiver 1404 may be referred to as a transceiving unit, a transceiving machine or a transceiving circuit, which may be configured to realizing a transceiving function. The transceiver 1404 may include a receiver and a sender. The receiver may be referred to as a receiving machine or a receiving circuit, etc., for realizing a receiving function; the sender may be referred to as a sending machine or a sending circuit, etc. for realizing a sending function.

Alternatively, the communication device 140 may further include one or more interface circuits 1406. The interface circuit 1406 is configured to receive code instructions and transmit the code instructions to the processor 1401. The code instructions are executed by the processor 1401, such that the communication device 140 performs the method as described in the above method embodiments.

The communication device 140 is configured to realize the functions of the terminal described in the above embodiments.

In some possible implementations, the processor 1401 may include a transceiver configured to realize receiving and sending functions. For example, the transceiver may be a transceiving circuit, or an interface, or an interface circuit. The transceiving circuit, the interface or the interface circuit configured to realize receiving and transmitting functions may be separate or integrated together. The transceiving circuit, the interface or the interface circuit may be configured to read and write codes/data, or the transceiving circuit, the interface or the interface circuit may be configured to transmit or deliver a signal.

In some possible implementations, the processor 1401 may store a computer program 1403. The computer program 1403 is run on the processor 1401, such that the communication device 140 executes the method as described in the above method embodiments. The computer program 1403 may be solidified in the processor 1401, in which case the processor 1401 may be realized by hardware.

In some possible implementations, the communication device 140 may include a circuit that may realize a sending, receiving or communication function in the above method embodiments. The processor and the transceiver described in the disclosure may be implemented on integrated circuits (ICs), analog ICs, radio frequency integrated circuits (RFICs), mixed signal ICs, application specific integrated circuits (ASICs), printed circuit boards (PCBs), electronic devices, etc. The processor and the transceiver may further be fabricated by using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon germanium (SiGe) and gallium arsenide (GaAs).

The communication device described in the above embodiments may be a network device, but the scope of the communication device described in the disclosure is not limited. A structure of the communication device may not be limited by FIG. 14. The communication device may be a stand-alone device or may be a part of a larger device. For example, the communication device may be:
(1) a stand-alone integrated circuit (IC), or a chip, or a system on chip or a subsystem;
(2) a set of one or more ICs, alternatively, which may also include a storage component for storing data and a computer program;
(3) an ASIC, such as a Modem;
(4) a module that may be embedded within other devices;
(5) a receiver, a terminal, a smart terminal device, a cellular phone, a wireless device, a handset, a mobile unit, a vehicle-mounted device, a network side device, a cloud device, an artificial intelligence device, etc.;
(6) others, and so forth.

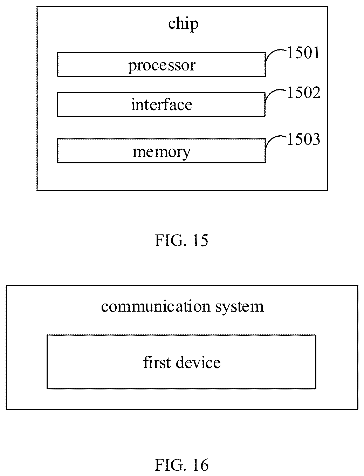

In the case that the communication device may be a chip or a system on chip, please refer to a block diagram of a chip illustrated in FIG. 15. The chip in FIG. 15 includes a processor 1501 and an interface 1502. There may be one or more processors 1501 and there may be multiple interfaces 1502.

Alternatively, the chip further includes a memory 1503, configured to store a necessary computer program and data.

Those skilled in the related art may understand that various illustrative logical blocks and steps listed in embodiments of the disclosure may be realized by electronic hardware, computer software or a combination of electronic hardware and computer software. Whether the function is realized by hardware or software depends on a specific application and a design requirement for an overall system. Those skilled in the art may realize the functions by using various methods for each specific application, but such an implementation should not be understood as beyond the protection scope of embodiments of the disclosure.

FIG. 16 is a block diagram illustrating a communication system according to an embodiment of the disclosure. As illustrated in FIG. 16, the communication system includes a first device, configured to execute the methods in FIG. 2 to FIG. 11.

The disclosure also provides a readable storage medium with instructions stored. When the instructions are executed by a computer, the functions in any one of the above method embodiments are realized.

A computer program product is further provided in the disclosure. The computer program product realizes the functions of any one of the above method embodiments when executed by a processor.

In the above embodiments, the functions may be in whole or in part realized by software, hardware, firmware, or any combination of them. When functions are realized by software, the functions may be realized in whole or in part in the form of a computer program product. The computer program product includes one or more computer programs. Procedures or functions according to embodiments of the disclosure are wholly or partially generated when the computer program is loaded and executed on a computer. The computer may be a general purpose computer, a special purpose computer, a computer network, or other programmable device. The computer program may be stored in a computer-readable storage medium or transmitted from one computer-readable storage medium to another. For example, the computer program may be transmitted from one website, computer, server, or data center to another via wire (such as a coaxial cable, a fiber optic, a digital subscriber line (DSL)) or wireless (such as infrared, wireless, microwave). The computer-readable storage medium may be any available medium that may be accessed by a computer or a data storage device such as a server that integrates one or more of the available medium, and a data center. The readable medium may be a magnetic medium (such as a floppy disk, a hard disk and a magnetic tape), an optical medium (such as a digital video disk (DVD)), or a semiconductor medium (such as a solid state disk (SSD)).

Those skilled in the art may understand that various numbers such as first and second involved in the disclosure are distinguished merely for convenience of description, but not intended to limit the scope of the embodiments of the disclosure, not to indicate an order of precedence.

The phase "at least one" in the disclosure may also be described as one or more, and the phase "a plurality of" may refer to two, three, four or more, which is not limited in the disclosure. In the embodiments of the disclosure, for a kind of technical feature, technical features in the kind of technical feature are distinguished by "first", "second", "third", "A", "B", "C" and "D", and there is no order of precedence or magnitude between the technical features described in "first", "second", "third", "A", "B", "C" and "D".

Corresponding relationships indicated by tables in the disclosure may be configured or predefined. A value of information in the tables is only an example, and may be configured as other values, which is not limited in the disclosure. When corresponding relationships between information and parameters are configured, it is not always necessary to configure all corresponding relationships indicated in the tables. For example, in the tables in the disclosure, the corresponding relationships indicated by some rows may not be configured. For another example, appropriate transformations and adjustments, such as splitting and merging, may be made based on the above tables. Names of parameters illustrated in headers in the tables may be other names understandable by the communication apparatus, and values or representations of the parameters may be other values or representations understandable by the communication device. When the above tables are implemented, other data structures may be employed, and for example, arrays, queues, containers, stacks, linear lists, pointers, linked lists, trees, graphs, structures, classes, heaps or hash tables may be used.

Predefined in the disclosure may be understood as defined, predefined, stored, pre-stored, pre-negotiated, pre-configured, solidified or pre-fired.

Those skilled in the related art may realize that units and algorithm steps of the examples described in combination with embodiments of the disclosure may be realized by electronic hardware or a combination of electronic hardware and computer software. Whether the functions are executed by hardware or software depends on a specific application and a design constraint of the technical solution. Those skilled in the art may employ different methods for each specific application to realize the described functions, but such implementation should not be considered as going beyond the scope of the disclosure.

Those skilled in the art may clearly understand that, for a detailed working process of a system, an apparatus and a unit described above reference may be made to a corresponding process in the above method embodiments, and details are not repeated here.

The above are only implementations of the disclosure. However, the protection scope of the disclosure is not limited here. Changes and substitutions that may be easily considered by those skilled in the art shall be included within the protection scope of the disclosure. Thus, the protection scope of the disclosure shall be subject to the protection scope of claims.

## Claims

1. A method for sidelink (SL) communication, performed by a first device, comprising:
in an autonomous resource allocation mode, removing a first resource from an SL grant in a case that a re-evaluation indication or a pre-emption indication of the first resource in the SL grant for sending an SL positioning reference signal (PRS) is obtained.

2. The method of claim 1, further comprising:
determining a second resource from a transmitting resource pool; and
adding the second resource to the SL grant.

3. The method of claim 1 or 2, further comprising:
before a first period previous to a time unit where SL control information (SCI) for indicating the first resource is located, performing re-evaluation or pre-emption check on the first resource, to obtain a re-evaluation result or a pre-emption check result; and
obtaining the re-evaluation indication or the pre-emption indication based on the re-evaluation result or the pre-emption check result,
wherein the first period is an SL processing time.

4. The method of claim 3, wherein the SCI comprises first-stage SCI and/or second-stage SCI.

5. The method of any one of claims 2 to 4, wherein in the case that the re-evaluation indication or the pre-emption indication of the first resource in the SL grant for sending the SL PRS is obtained, removing the first resource from the SL grant comprises:
removing the first resource from the SL grant in a case that the re-evaluation indication of the first resource is obtained and the first device did not send SCI for indicating the first resource to a second device.

6. The method of any one of claims 2 to 5, wherein in the case that the re-evaluation indication or the pre-emption indication of the first resource in the SL grant for sending the SL PRS is obtained, removing the first resource from the SL grant comprises:
removing the first resource from the SL grant in a case that the pre-emption indication of the first resource is obtained and the first device sent the SCI for indicating the first resource to a second device.

7. The method of claim 5 or 6, wherein determining the second resource from the transmitting resource pool comprises:
determining at least one resource from the transmitting resource pool, wherein a first resource set formed by the at least one resource and a fourth resource meets a first preset condition, and the fourth resource is a resource in the SL grant other than the first resource; and
randomly selecting the second resource from the at least one resource.

8. The method of claim 7, wherein the first preset condition comprises at least one of:
a number of resources in the first resource set meeting a frequency domain resource number condition;
a number of retransmissions of the SL PRS corresponding to the first resource set meeting a retransmission number condition;
sending the SL PRS using the first resource set being able to be completed within a delay requirement;
a time interval between two resources in the first resource set meeting a minimum time interval requirement; or
resources in the first resource set being capable of indicating by the SCI for retransmission.

9. The method of any one of claims 6 to 8, wherein
the second resource is located after the first resource, and the second resource is located within a discontinuous reception (DRX) active period of the second device in a case that the first device is configured with SL DRX, and the second device is a receiving device of the SL PRS.

10. The method of any one of claims 3 to 9, wherein obtaining the re-evaluation indication or the pre-emption indication based on the re-evaluation result or the pre-emption check result comprises:
obtaining the re-evaluation indication in a case that the re-evaluation result indicates that the first resource does not belong to a candidate resource set.

11. The method of any one of claims 3 to 10, further comprising:
receiving SCI sent by a third device, wherein the SCI indicates a fifth resource; and
removing the first resource from the candidate resource set in a case that the fifth resource meets a second preset condition.

12. The method of claim 11, wherein the second preset condition comprises at least one of:
the SCI indicating a resource reservation period of the fifth resource and a reception priority of the fifth resource;
the fifth resource overlapping with the first resource; or
a measurement result of the fifth resource being greater than or equal to a first threshold.

13. The method of claim 12, wherein obtaining the re-evaluation indication or the pre-emption indication based on the re-evaluation result or the pre-emption check result comprises:
obtaining the pre-emption indication in a case that the first resource is removed from the candidate resource set, the first device starts a pre-emption function, and the reception priority of the fifth resource is greater than a transmitting priority of the first resource.

14. The method of claim 12, wherein obtaining the re-evaluation indication or the pre-emption indication based on the re-evaluation result or the pre-emption check result comprises:
obtaining the pre-emption indication in a case that the first resource is removed from the candidate resource set, the first device does not start a pre-emption function, the reception priority of the fifth resource is greater than a transmitting priority of the first resource, and a reception priority of the first resource is greater than a priority of the pre-emption function.

15. The method of claim 13 or 14, wherein the pre-emption function of the first device is used independently for the SL PRS, or the pre-emption function of the first device is used for both the SL PRS and SL data.

16. The method of any one of claims 10 to 15, further comprising:
performing sensing on resources in the transmitting resource pool, to obtain a sensing result; and
determining the candidate resource set based on the sensing result.

17. An apparatus for sidelink (SL) communication, comprising:
a processing module, configured to, in an autonomous resource allocation mode, remove a first resource from an SL grant in a case that a re-evaluation indication or a pre-emption indication of a first resource in the SL grant for sending an SL positioning reference signal (PRS) is obtained.

18. A communication device, comprising: a transceiver; a memory; and a processor respectively connected to the transceiver and the memory, configured to control wireless signal transmission and reception of the transceiver by executing computer-executable instructions stored in the memory, and enable the method of any one of claims 1 to 16 to be realized.

19. A computer-readable storage medium for storing instructions that, when executed, cause the method of any one of claims 1 to 16 to be realized.
